# EUROPÄISCHE PATENTSCHRIFT

(11) **EP 3 760 476 B1**
(45) Veröffentlichungstag und Bekanntmachung des Hinweises auf die Patenterteilung: **04.05.2022**
(21) Anmeldenummer: 19184122.0
(22) Anmeldetag: 03.07.2019
(51) Int. Cl.: B60M 1/20

(54) **VORRICHTUNG ZUR BEFESTIGUNG INSBESONDERE EINES STABFÖRMIGEN AUSLEGERARMS AN EINEM MAST, ANORDNUNG MIT EINER VORRICHTUNG UND VERFAHREN ZUM AUSBILDEN EINER DERARTIGEN ANORDNUNG**
DEVICE FOR FIXING ESPECIALLY A BAR-SHAPED CANTILEVER ARM TO A MAST, ARRANGEMENT COMPRISING A DEVICE AND METHOD FOR FORMING SUCH AN ARRANGEMENT
DISPOSITIF DE FIXATION, EN PARTICULIER D'UN BRAS EN FORME DE TIGE À UN MÂT, AGENCEMENT DOTÉ D'UN DISPOSITIF ET PROCÉDÉ DE FABRICATION D'UN TEL AGENCEMENT

(43) Veröffentlichungstag der Anmeldung: 06.01.2021
(73) Patentinhaber: Kummler + Matter AG, 8108 Dällikon (CH)
(72) Erfinder: Wüst, Daniel, 8108 Dällikon (CH)
(74) Vertreter: Patent- und Rechtsanwälte Behrmann Wagner PartG mbB

(56) Entgegenhaltungen:
- EP-A1- 3 009 297
- CH-A2- 714 051
- DE-A1- 19 921 054
- DE-B3-102015 111 592
- DE-U1- 29 616 719
- FR-A1- 2 713 567
- FR-A1- 2 811 945

## Beschreibung

### Technisches Gebiet

Die Erfindung betrifft eine Vorrichtung zur Befestigung insbesondere eines stabförmigen Auslegerarms an einem Mast. Ferner betrifft die Erfindung eine Anordnung mit einer erfindungsgemäßen Vorrichtung, einem Mast und einem Auslegerarm sowie ein Verfahren zum Ausbilden einer derartigen Anordnung. Insbesondere dient die Anordnung der Befestigung von Fahrstromleitungen von Schienen- bzw. Landfahrzeugen (Elektrobussen). Die Erfindung kann jedoch grundsätzlich auch für andere Anwendungen angewandt werden.

### Stand der Technik

Fahrstromleitungen für Züge werden oberhalb der Schienen oftmals einem Auslegerarm befestigt, der wiederum an einem seitlich neben den Gleisen angeordneten Mast befestigt ist. Der Auslegerarm ist dabei im Wesentlichen in einer horizontalen Richtung angeordnet und mittels eines zusätzlichen Abspannseils an dem Mast gesichert bzw. positioniert. Entweder bei Neubauten von Fahrstromleitungen, oder aber bei Modernisierungen bzw. bei Reparaturen kann es erforderlich sein, einen derartigen Auslegerarm an dem Mast befestigen zu müssen. Hierzu ist es bekannt, den Auslegerarm in einem Anschlussbereich zum Mast derart konstruktiv zu gestalten, dass dieser beispielsweise mit einer entsprechenden Aufnahme am Auslegerarm den Mast umgreift und mittels Befestigungselementen insbesondere in axialer Richtung am Mast gesichert werden kann. Als nachteilhaft ist dabei anzusehen, dass es dabei erforderlich ist, den Auslegerarm in der gewünschten Sollposition an dem Mast zu positionieren, bis dieser am Mast endgültig fixiert ist. Dazu sind gegebenenfalls Hilfsvorrichtungen erforderlich, um den Auslegerarm in horizontaler Richtung auszurichten bzw. senkrecht zum Mast zu halten. Die bekannten Vorrichtungen zur Befestigung eines derartigen Auslegerarm sind daher insofern nachteilhaft, als ein zeitaufwendiger, ggf. Hilfsvorrichtungen erforderlicher Montageprozess erforderlich ist. Dies ist insbesondere bei Reparaturen an bestehenden Fahrstrecken insofern besonders nachteilhaft, da während der Reparatur kein Fahrbetrieb stattfinden kann. Insbesondere auf stark frequentierten Bahnstrecken müssen Betriebspausen für Bauarbeiten möglichst kurz gehalten werden, um Betriebsverluste zu vermeiden.

Aus Gründen der Baulogistik werden oftmals Montagearbeiten auch im Bahnbereich mittels eines Hubschraubers durchgeführt. Beispielsweise werden Auslegerarme mit dem Hubschrauber zum Montageplatz bzw. zum Mast transportiert. Eine Montage eines Auslegerarms mit einem Hubschrauber als Hebegerät sollte infolge der kostenintensiven Flugzeit möglichst rasch erfolgen.

Aus der FR 2 713 567 A1 ist eine Vorrichtung mit den Merkmalen des Oberbegriffs des Anspruchs 1 bekannt. Bei der bekannten Vorrichtung sind Sicherungselemente in Form von zwei Splinten vorgesehen, die ein bolzenförmiges Anschlusselement in einer vertikalen Ausrichtung an einer Trägereinrichtung sichern.

Ferner ist es aus der DE 199 21 054 A1 bekannt zur Sicherung einer Achse eine Schraubverbindung als Sicherungselement vorzusehen.

Die EP 3 009 297 A1 zeigt die Positionierung bzw. horizontale Ausrichtung eines Auslegerarms an einem Mast mittels eines Spanndrahts.

### Offenbarung der Erfindung

Die erfindungsgemäße Vorrichtung insbesondere zur Befestigung eines stabförmigen Auslegerarms an einem Mast mit den Merkmalen des Anspruchs 1 hat den Vorteil, dass sie eine besonders einfache und wenig zeitintensive Montage des Auslegerarms an dem Mast ermöglicht. Hierzu sieht es die Lehre des Anspruchs 1 vor, dass die Trägereinrichtung zwei parallel zueinander angeordnete, insbesondere in Form von Seitenplatten ausgebildete Randbereiche aufweist, die dazu ausgebildet sind, zwischen den Randbereichen einen Aufnahmeraum für den Querschnitt des Anschlussbereichs des Auslegerarms auszubilden, wobei in jedem Randbereich eine Aufnahme für das seitlich von dem Anschlussbereich des Auslegerarms wegragende Anschlusselement ausgebildet ist, wobei die Aufnahme in Form eines Aufnahmeschlitzes ausgebildet ist, die an einer Oberseite des Randbereichs eine Öffnung zum Einführen des Anschlusselements aufweist, und wobei der Aufnahmeschlitz auf einer dem Mast zugeordneten Seite in eine Horizontalführung für das Anschlusselement übergeht.

Eine derartige konstruktive Ausgestaltung gemäß des Anspruchs 1 weist mehrere Vorteile auf: Zum einen ist durch das Vorsehen zweier Aufnahmen und somit auch zweier Anschlusselemente am Auslegerarm dieser um seine Längsachse an der Trägereinrichtung positioniert bzw. ausgerichtet. Zum zweiten wird es durch den in der erfindungsgemäßen Ausgestaltung vorgesehenen Aufnahmeschlitz ermöglicht, den Auslegerarm mit seinem Anschlussbereich, der beispielsweise in Form einer den Auslegerarm durchquerenden Welle bzw. Achse ausgebildet ist, von oben her in die Trägereinrichtung einzuführen. Bei einer anschießenden Horizontalbewegung des Auslegerarms in Richtung zum Mast gelangt das Anschlusselement des Auslegerarms in eine Horizontalführung des Aufnahmeschlitzes, so dass der Auslegerarm zusätzlich in vertikaler Richtung zum Mast positioniert ist und nicht mehr aus der Öffnung des Aufnahmeschlitzes heraustreten kann. Insbesondere in Zusammenhang mit einem Tragseil, das den Auslegerarm am Mast oberhalb des Auslegerarms befestigt und den Auslegerarm zum Mast in horizontaler Richtung positioniert, erfolgt aufgrund der Statik eine Kraftbeanspruchung des Auslegerarms in Richtung zum Mast und somit in Richtung der Horizontalführung, so dass ein unbeabsichtigtes Heraustreten des Anschlusselements aus dem Aufnahmeschlitz zusätzlich verhindert wird.

Vorteilhafte Weiterbildungen der erfindungsgemäßen Vorrichtung zur Befestigung insbesondere eines stabförmigen Auslegerarms an einem Mast sind in den Unteransprüchen aufgeführt.

Eine ganz besonders bevorzugte Weiterbildung sieht vor, dass der Querschnitt des Aufnahmeraums zur formschlüssigen, um eine Längsachse des Auslegerarms drehfesten Anordnung des Auslegerarms angepasst ist. Eine derartige Ausgestaltung des Aufnahmeraums in Zusammenhang mit dem Querschnitt des Auslegerarms im Bereich des Anschlussbereichs ermöglicht es, eine torsionsfeste Anordnung des Auslegerarms an dem Mast auch ohne zusätzliche Einrichtungen bzw. Windsicherungen zu bewirken. Dadurch eignet sich diese Ausgestaltung insbesondere auch zur Aufnahme von relativ hohen Windlasten.

Um einen möglichst einfachen Montagevorgang des Sicherungselements zu ermöglichen, ist es vorgesehen, dass das Sicherungselement dazu ausgebildet ist, den Bereich der Öffnung des Aufnahmeschlitzes bei in der Horizontalführung angeordnetem Anschlusselement durch eine klemmschlüssige Verbindung zu verschließen.

Die Ausbildung der klemmschlüssigen Verbindung kann insbesondere durch Einschlagen bzw. Einhämmern des Sicherungselements in die Öffnung der Trägereinrichtung erfolgen. Hierzu sieht es die klemmschlüssige Verbindung vor, dass das Sicherungselement und/oder der Aufnahmeschlitz im Bereich der Öffnung einen sich in einer Einführrichtung des Sicherungselements in die Öffnung verringernden, insbesondere keilförmigen Querschnitt aufweist.

Eine besonders bevorzugte konstruktive Ausgestaltung zur Sicherstellung einer definierten Einführbewegung des Sicherungselements in die Öffnung der Trägereinrichtung sieht vor, dass das Sicherungselement Führungsbereiche zum Ausrichten des Sicherungselements zur Trägereinrichtung beim Einführen in die Öffnung aufweist, die mit dem Randbereichen der Trägereinrichtung zusammenwirken.

Obwohl das Sicherungselement bereits durch die klemmschlüssige Verbindung an der Trägereinrichtung hinreichend gesichert ist, kann es zur Ausbildung einer zusätzlichen Sicherung vorgesehen sein, dass das Sicherungselement zusätzlich mittels einer kraftschlüssigen Verbindung, insbesondere mittels einer Schraubverbindung, an der Trägereinrichtung fixierbar ist.

Um eine mehrmalige Montage eines Auslegerarms an dem Mast ohne einen Austausch der Trägereinrichtung zu ermöglichen, ist es darüber hinaus vorgesehen, dass das Sicherungselement aus einem gegenüber dem Material der Trägereinrichtung im Bereich der Öffnung ähnlichen, vorzugsweise weicheren Material besteht. Dies stellt sicher, dass sich beim Ausbilden der klemmschlüssigen Verbindung die Geometrie der Öffnung an der Trägereinrichtung nicht verändert, so dass bei einem Austausch bzw. einer Reparatur des Auslegerarms die ursprünglich verwendete Trägereinrichtung weiterverwendet werden kann.

Die Erfindung umfasst weiterhin eine Anordnung aufweisend eine soweit beschriebene erfindungsgemäße Vorrichtung, einen Mast und einen Auslegerarm, der mittels der Vorrichtung an dem Mast befestigt ist. Insbesondere ist die Anordnung dazu ausgebildet, dass der Auslegerarm Fahrstromleitungen für Schienen- oder Landfahrzeuge trägt.

Zuletzt umfasst die Erfindung auch ein Verfahren zum Ausbilden einer derartigen Anordnung. Dieses Verfahren sieht zumindest folgende Schritte vor: Zunächst erfolgt ein Befestigen der Trägereinrichtung an dem Mast. Die Befestigung kann entweder am liegenden Mast oder an dem bereits stehenden Mast erfolgen. Anschließend erfolgt ein Einführen wenigstens eines Aufnahmeelements des Auslegerarms in die Aufnahme der Trägereinrichtung. Zuletzt erfolgt ein Sichern des Aufnahmeelements in der Aufnahme der Trägereinrichtung durch eine klemmschlüssige Befestigung des Sicherungselements an der Trägereinrichtung.

In einer Weiterbildung des Verfahrens sieht es ein zusätzlicher Verfahrensschritt vor, dass das Sicherungselement zusätzlich durch eine kraftschlüssige Verbindung, insbesondere durch eine Schraubverbindung, mit der Trägereinrichtung verbunden wird.

Die horizontale Ausrichtung des Auslegerarms zum Mast und eine Kraftbeaufschlagung des Auslegerarms bzw. des Anschlusselements in Richtung der Horizontalführung der Trägereinrichtung erfolgt bei einer Weiterbildung des Verfahrens dadurch, dass der Auslegerarm mittels eines Tragseils in einer horizontalen Lage am Mast positioniert wird, wobei das Tragseil mit einem ersten Ende in einem Abstand zur Trägereinrichtung am Auslegerarm und mit einem zweiten Ende im Bereich des Masts oberhalb der Trägereinrichtung befestigt wird.

Der Montageprozess lässt sich besonders effektiv und einfach durchführen, wenn das Befestigen des Tragseils am Mast vor dem Positionieren des Auslegerarms im Bereich der Trägereinrichtung erfolgt.

Weitere Vorteile, Merkmale und Einzelheiten der Erfindung ergeben sich aus der nachfolgenden Beschreibung bevorzugter Ausführungsbeispiele sowie anhand der Zeichnungen.

Kurze Beschreibung der Zeichnungen
- Fig. 1: zeigt eine Seitenansicht auf einen an einem Mast befestigten Auslegerarm,
- Fig. 2: zeigt einen Teilbereich der Anordnung gemäß Fig. 1 zur Verdeutlichung der Befestigung des Auslegerarms am Mast in einer perspektivischen Darstellung,
- Fig. 3: eine perspektivische Darstellung einer Trägereinrichtung mit daran befestigten Sicherungselementen,
- Fig. 4: eine Seitenansicht auf die Trägereinrichtung gemäß Fig. 3,
- Fig. 5: eine Einzeldarstellung eines Sicherungselements in einer perspektivischen Darstellung und
- Fig. 6: einen Längsschnitt durch das Sicherungselement gemäß Fig. 5.

### Ausführungsformen der Erfindung

Gleiche Elemente bzw. Elemente mit gleicher Funktion sind in den Figuren mit den gleichen Bezugsziffern versehen.

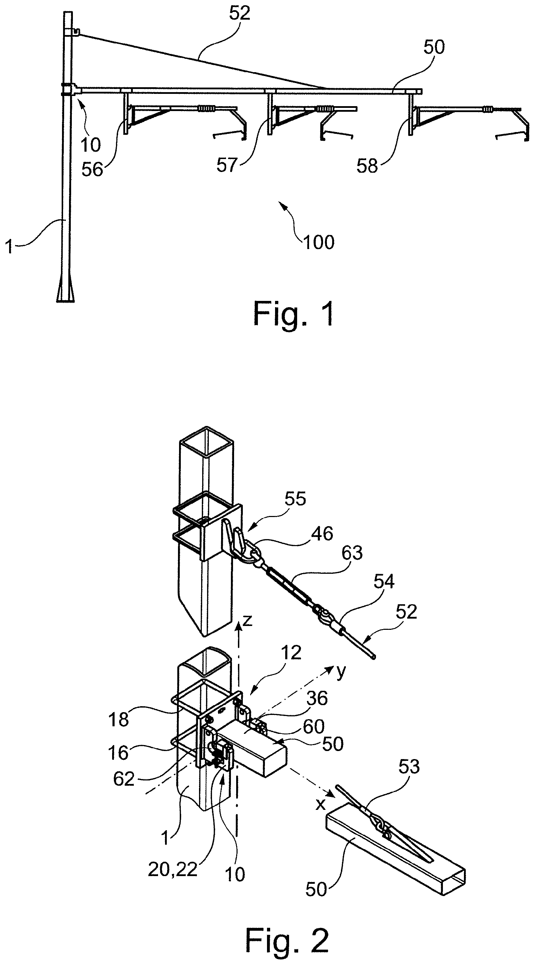

In der Fig. 1 ist eine Anordnung 100 dargestellt, die einen auf einem nicht dargestellten Untergrund vertikal verankerten Mast 1 umfasst, an dem ein Auslegerarm 50, der im Wesentlichen horizontal zum nicht dargestellten Untergrund bzw. senkrecht zum Mast 1 ausgerichtet ist, mittels einer Vorrichtung 10 an dem Mast 1 befestigt ist. Die Befestigung bzw. Ausrichtung des Auslegerarms 50 erfolgt darüber hinaus mittels eines Tragseils 52 (das auch als Ankerseil bezeichnet wird), das mit einem ersten Ende 53 in einem Abstand vom Mast 1 an dem Auslegerarm 50, und mit einem zweiten Ende 54 mittels einer in der Fig. 2 dargestellten Befestigungseinrichtung 55, ggf. unter Zwischenschaltung eines Spannschlosses 63 zur Feinjustierung bzw. Ausrichtung des Auslegerarms 50, am Mast 1 festgelegt ist.

Der Auslegerarm 50 dient der Befestigung von im Ausführungsbeispiel drei Auslegern 56 bis 58, an denen der Stromführung dienende Fahrleitungen für Schienen- bzw. Landfahrzeuge befestigt sind. Die Länge des stabförmigen, beispielweise einen rechteckförmigen Hohlquerschnitt aufweisenden Auslegerarms 50, kann dabei in der in der Fig. 2 erkennbaren X-Achse typischerweise bis zu 13 Meter betragen, wobei auch andere Abmessungen denkbar sind.

Entsprechend der Darstellung der Fig. 2 bis 6 umfasst die Vorrichtung 10 eine an dem Mast 1 befestigte Trägereinrichtung 12. Die Trägereinrichtung 12 hat eine im Ausführungsbeispiel rechteckförmige Trägerplatte 14, die mittels zweier, jeweils U-förmiger Drahtbügel 16, 18 und Befestigungsmuttern 19 an dem Mast 1 befestigt werden kann. Insbesondere wird dabei die Trägereinrichtung 12 in einer axialen Soll-Position am Mast 1 fixiert bzw. positioniert. Von der Trägerplatte 14 ragen auf der den Drahtbügeln 16,18 abgewandten Seite zwei Randbereiche 20 in Form von Seitenplatten 22 ab, die parallel zueinander angeordnet und identisch ausgebildet sind. Die Seitenplatten 22 sind vorzugsweise mittels Schweißverbindungen 24 an der Trägerplatte 14 befestigt. Die beiden Seitenplatten 22 bilden zwischen den Seitenplatten 22 einen Aufnahmeraum 25 für einen stirnseitigen Anschlussbereich 60 des Auslegerarms 50 aus.

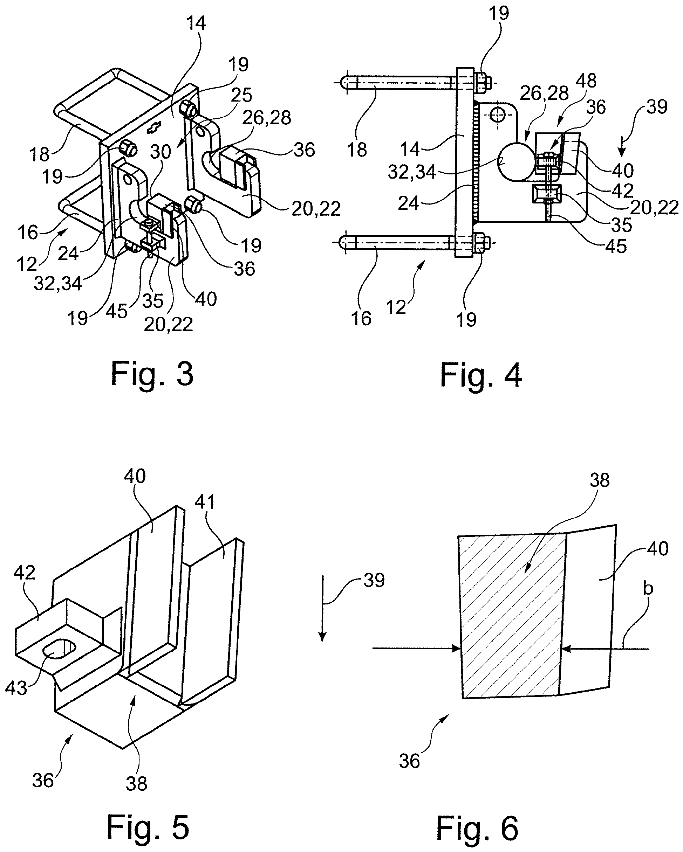

Wie besonders deutlich anhand der Fig. 3 und 4 erkennbar ist, weisen die beiden Seitenplatten 22 jeweils eine Aufnahme 26 in Form eines Aufnahmeschlitzes 28 auf. Der Aufnahmeschlitz 28 ist auf der der Oberseite des Masts 1 zugewandten Seite in Form einer Öffnung 30 ausgebildet, die sich in Richtung zur Trägerplatte 14 in einen halbkreisförmigen Querschnitt 32 verändert, der gleichzeitig eine Horizontalführung 34 für jeweils ein, von dem Auslegerarm 50 im Bereich des Anschlussbereichs 60 seitlich abragendes Anschlusselement 62 ausbildet. Das Anschlusselement 62 kann beispielsweise als Querbolzen bzw. als Welle oder Achse ausgebildet sein, der den Auslegerarm 50 im Bereich des Anschlussbereichs 60 durchquert und einen kreisförmigen Querschnitt aufweist.

Entsprechend der Darstellung der Fig. 3 und 4 ragen von den beiden Seitenplatten 22 auf einander abgewandten Seiten jeweils eine Konsole 35 ab. Weiterhin umfasst die Vorrichtung 10 ein mit der jeweiligen Seitenplatte 22 der Trägereinrichtung 12 zusammenwirkendes Sicherungselement 36. Das Sicherungselement 36, das in den Fig. 5 und 6 in Einzeldarstellung gezeigt ist, weist einen im Querschnitt keilförmigen Zentralbereich 38 auf, dessen Breite b sich in einer Einführrichtung 39 in die Öffnung 30 verringert. Von dem Zentralbereich 38 ragen auf der der Trägerplatte 14 abgewandten Seite zwei, vorzugsweise durch Schweißverbindungen mit dem Zentralbereich 38 verbundene, parallel zueinander angeordnete, plattenförmige Führungen 40, 41 ab. Der Abstand zwischen den Führungen 40, 41 ist der Dicke des Materials der beiden Seitenplatten 22 angepasst, so dass mittels der Führungen 40, 41 das Sicherungselement 34 in Einführrichtung 39 zu den Seitenplatten 22 geführt ist.

Von einer Seite des Zentralbereichs 38 ragt eine Sicherungsplatte 42 mit einer Durchgangsbohrung 43 ab, wobei die Sicherungsplatte 42 vorzugsweise durch eine Schweißverbindung mit dem Zentralbereich 38 verbunden ist. Entsprechend der Darstellung der Fig. 3 und 4 lässt sich das Sicherungselement 36 mittels einer Sicherungsschraube 45 an der Konsole 35 der Seitenplatte 22 befestigen.

Die Montage des Auslegerarms 50 an dem Mast 1 wird beispielhaft wie folgt beschrieben: In einem ersten Schritt werden die Trägereinrichtung 12 sowie die Befestigungseinrichtung 55 an dem Mast 1 in der gewünschten Soll-Position befestigt. Anschließend erfolgt ein Einhängen des Tragseils 52 über einen Schäkel 46 o.ä. Element entsprechend der Fig. 2 an der Befestigungseinrichtung 55. Danach wird der Auslegerarm 50 mit seinem Anschlusselement 62 in den Aufnahmeschlitz 28 im Bereich der Öffnung 30 der jeweiligen Seitenplatte 22 der Trägereinrichtung 12 eingeführt. Darauf erfolgt eine Horizontalbewegung des Auslegerarms 50 in Richtung der in der Fig. 2 dargestellten X-Achse. Dadurch gelangt das Anschlusselement 62 in den Bereich der Horizontalführung 34, so dass der Auslegerarm 50 im Bereich des Anschlussbereichs 60 in Richtung der in der Fig. 2 dargestellten Z-Achse positioniert ist. Gleichzeitig bzw. anschließend erfolgt die horizontale Ausrichtung des Auslegerarms 50 bzw. die vertikale Anordnung zum Mast 1. Als nächstes werden die beiden Sicherungselemente 36 durch Einschlagen in Einführrichtung 39 mit der Trägereinrichtung 12 verbunden, wobei jeweils klemmschlüssige Verbindungen 48 ausgebildet werden. Zuletzt erfolgt die zusätzliche Sicherung der Sicherungselemente 36 durch Ausbildung von kraftschlüssigen Verbindungen mittels der Sicherungsschrauben 45.

Die soweit beschriebene Vorrichtung 10 kann in vielfältiger Art und Weise abgewandelt bzw. modifiziert werden, ohne vom Erfindungsgedanken abzuweichen. Die Erfindung ist durch die folgenden Ansprüche definiert .

Insbesondere ist es auch denkbar, beispielsweise zunächst den Auslegerarm 50 an der Trägereinrichtung 12 am Mast 1 zu befestigen und anschließend erst das Tragseil 52 an der Befestigungseinrichtung 55.

### Bezugszeichenliste

- 1: Mast

- 10: Vorrichtung
- 12: Trägereinrichtung
- 14: Trägerplatte
- 16,18: Drahtbügel
- 19: Befestigungsmutter
- 20: Randbereich
- 22: Seitenplatte
- 24: Schweißverbindung
- 25: Aufnahmeraum
- 26: Aufnahme
- 28: Aufnahmeschlitz
- 30: Öffnung
- 32: halbkreisförmiger Querschnitt
- 34: Horizontalführung
- 35: Konsole
- 36: Sicherungselement
- 38: Zentralbereich
- 39: Einführrichtung
- 40,41: Führung
- 42: Sicherungsplatte
- 43: Durchgangsbohrung
- 45: Sicherungsschraube
- 46: Schäkel
- 48: klemmschlüssige Verbindung
- 50: Auslegerarm
- 52: Tragseil
- 53: erstes Ende
- 54: zweites Ende
- 55: Befestigungseinrichtung
- 56 bis 58: Ausleger
- 60: Anschlussbereich
- 62: Anschlusselement
- 63: Spannschloss

- 100: Anordnung

## Patentansprüche

1. Vorrichtung (10) zur Befestigung insbesondere eines stabförmigen Auslegerarms (50) an einem Mast (1), mit einer an dem Mast (1) fixierbaren Trägereinrichtung (12), die als ein von dem Mast (1) und dem Auslegerarm (50) separates Bauteil ausgebildet ist, mit wenigstens einer an der Trägereinrichtung (12) ausgebildeten Aufnahme (26) zur formschlüssigen Anordnung eines Anschlusselements (62) des Auslegerarms (50) an einem Anschlussbereich (60) des Auslegerarms (50), und mit einem Sicherungselement (36) zur Sicherung des Anschlusselements (62) des Auslegerarms (50) in der Aufnahme (26) der Trägereinrichtung (12),
**dadurch gekennzeichnet,**
**dass** die Trägereinrichtung (12) zwei parallel zueinander angeordnete, in Form von Seitenplatten (22) ausgebildete Randbereiche (20) aufweist, die dazu ausgebildet sind, zwischen den Randbereichen (20) einen Aufnahmeraum (25) für den Querschnitt des Anschlussbereichs (60) des Auslegerarms (5) auszubilden, wobei in jedem Randbereich (20) eine Aufnahme (26) für das seitlich von dem Anschlussbereich (60) des Auslegerarms (50) wegragende Anschlusselement (62) ausgebildet ist, und wobei die Aufnahme (26) in Form eines Aufnahmeschlitzes (28) ausgebildet ist, der an einer Oberseite des Randbereichs (20) eine Öffnung (30) zum Einführen des Anschlusselements (62) aufweist, und wobei der Aufnahmeschlitz (28) auf einer dem Mast (1) zugeordneten Seite in eine Horizontalführung (34) für das Anschlusselement (62) übergeht.

2. Vorrichtung nach Anspruch 1,
**dadurch gekennzeichnet,**
**dass** der Querschnitt des Aufnahmeraums (25) zur formschlüssigen, um eine Längsachse (X) des Auslegerarms (50) drehfesten Anordnung des Auslegerarms (50) angepasst ist.

3. Vorrichtung nach Anspruch 1 oder 2,
**dadurch gekennzeichnet,**
**dass** das Sicherungselement (36) dazu ausgebildet ist, den Bereich der Öffnung (30) des Aufnahmeschlitzes (28) bei in der Horizontalführung (34) angeordnetem Anschlusselement (62) durch eine klemmschlüssige Verbindung (48) zu verschließen.

4. Vorrichtung nach Anspruch 3,
**dadurch gekennzeichnet,**
**dass** das Sicherungselement (36) einen sich in einer Einführrichtung (39) des Sicherungselements (36) in die Öffnung (30) reduzierenden, insbesondere keilförmigen Querschnitt aufweist.

5. Vorrichtung nach Anspruch 3 oder 4,
**dadurch gekennzeichnet,**
**dass** das Sicherungselement (36) Führungen (40, 41) zum Ausrichten des Sicherungselements (36) zur Trägereinrichtung (12) beim Einführen in die Öffnung (30) aufweist, die mit den Randbereichen (20) der Trägereinrichtung (12) zusammenwirken.

6. Vorrichtung nach einem der Ansprüche 1 bis 5,
**dadurch gekennzeichnet,**
**dass** das Sicherungselement (36) zusätzlich mittels einer kraftschlüssigen Verbindung, insbesondere mittels einer Schraubverbindung (45), an der Trägereinrichtung (12) fixierbar ist.

7. Vorrichtung nach einem der Ansprüche 3 bis 6,
**dadurch gekennzeichnet,**
**dass** das Sicherungselement (36) aus einem gegenüber dem Material der Trägereinrichtung (12) im Bereich der Öffnung (30) ähnlichem, vorzugsweise einem weicheren Material besteht.

8. Anordnung (100), aufweisend eine Vorrichtung (10), die nach einem der Ansprüche 1 bis 7 ausgebildet ist, einen Mast (1) und einen Auslegerarm (50), der mittels der Vorrichtung (10) an dem Mast (1) befestigt ist.

9. Anordnung nach Anspruch 8,
**dadurch gekennzeichnet,**
**dass** der Auslegerarm (50) dazu ausgebildet ist, Fahrstromleitungen für Schienen- oder Landfahrzeuge zu tragen.

10. Verfahren zur Ausbildung einer Anordnung (100) nach Anspruch 8 oder 9, umfassend zumindest folgende Schritte:
- Befestigen der Trägereinrichtung (12) an dem Mast (1)
- Einführen wenigstens eines Aufnahmeelements (62) des Auslegerarms (50) in die Aufnahme (26) der Trägereinrichtung (12)
- Sichern des Aufnahmeelements (62) in der Aufnahme (26) der Trägereinrichtung (12) durch klemmschlüssige Befestigung des Sicherungselements (36) an der Trägereinrichtung (12).

11. Verfahren nach Anspruch 10,
**dadurch gekennzeichnet,**
**dass** das Sicherungselement (36) zusätzlich durch eine kraftschlüssige Verbindung, insbesondere durch eine Schraubverbindung (45), mit der Trägereinrichtung (12) verbunden wird.

12. Verfahren nach Anspruch 10 oder 11,
**dadurch gekennzeichnet,**
**dass** der Auslegerarm (50) mittels eines Tragseils (52) in einer horizontalen Lage am Mast (1) positioniert wird, wobei das Tragseil (52) mit einem ersten Ende (53) in einem Abstand zur Trägereinrichtung (12) am Auslegerarm (50) und mit einem zweiten Ende (54) im Bereich des Mastes (1) oberhalb der Trägereinrichtung (12) befestigt wird.

13. Verfahren nach Anspruch 12,
**dadurch gekennzeichnet,**
**dass** das Befestigen des Sicherungsseils (52) am Mast (1) vor dem Positionieren des Auslegerarms (50) im Bereich der Trägereinrichtung (12) erfolgt.

## Claims

1. A device (10) for fastening in particular a rod-shaped cantilever arm (50) to a mast (1), the device (10) having a support device (12) which can be fixed to the mast (1) and which is formed as a component separate from the mast (1) and the cantilever arm (50), the device (10) also having at least one reception (26) formed on the support device (12) for the form-fitting arrangement of a connection element (62) of the cantilever arm (50) on a connection area (60) of the cantilever arm (50), and the device (10) having a securing element (36) for securing the connection element (62) of the cantilever arm (50) in the reception (26) of the support device (12),
**characterized in that**
the support device (12) has two edge areas (20) which are disposed parallel to one another, which are formed in the form of side plates (22) and which are configured to form a reception space (25) for the cross section of the connection area (60) of the cantilever arm (5) between the edge areas (20), wherein a reception (26) for the connection element (62) which protrudes laterally from the connection area (60) of the cantilever arm (50) is formed in each edge area (20), and wherein the reception (26) is formed in the form of a reception slot (28) which has an opening (30) for inserting the connection element (62) on an upper side of the edge area (20), and wherein the reception slot (28) passes into a horizontal guide (34) for the connection element (62) on a side which is assigned to the mast (1).

2. The device according to claim 1,
**characterized in that**
the cross section of the reception space (25) is adapted for the form-fitting arrangement of the cantilever arm (50) for co-rotation about a longitudinal axis (X) of the cantilever arm (50).

3. The device according to claim 1 or 2,
**characterized in that**
the securing element (36) is configured to close the area of the opening (30) of the insertion slot (28) by a clamping connection (48) when the connection element (62) is disposed in the horizontal guide (34).

4. The device according to claim 3,
**characterized in that**
the securing element (36) has a cross section which tapers in an insertion direction (39) of the securing element (36) into the opening (30) and which is in particular wedge-shaped.

5. The device according to claim 3 or 4,
**characterized in that**
the securing element (36) has guides (40) for aligning the securing element (36) with respect to the support device (12) when the securing element (36) is inserted into the opening (30), the guides (40, 41) interacting with the edge areas (20) of the support device (12).

6. The device according to any one of claims 1 to 5,
**characterized in that**
the securing element (36) can additionally be fixed to the support device (12) by means of a force-fitting connection, in particular by means of a screw connection (45).

7. The device according to any one of claims 3 to 6,
**characterized in that**
the securing element (36) is made of a material which is similar to, preferably softer than, the material of the support device (12) in the area of the opening (30).

8. An arrangement (100) having a device (10) formed according to any one of claims 1 to 7, a mast (1) and a cantilever arm (50) fastened to the mast (1) by means of the device (10).

9. The arrangement according to claim 8,
**characterized in that**
the cantilever arm (50) is configured to carry traction current lines for rail or land vehicles.

10. A method for realizing an arrangement (100) according to claim 8 or 9, the method comprising at least the following steps of
- fastening the support device (12) to the mast (1)
- inserting at least one reception element (62) of the cantilever arm (50) into the reception (26) of the support device (12)
- securing the reception element (62) in the reception (26) of the support device (12) by clamping fastening the securing element (36) to the support device (12).

11. The method according to claim 10,
**characterized in that**
the securing element (36) is additionally connected to the support device (12) by a force-fitting connection, in particular by a screw connection (45).

12. The method according to claim 10 or 11,
**characterized in that**
the cantilever arm (50) is positioned in a horizontal position on the mast (1) by means of a support rope (52), wherein a first end (53) of the support rope (52) is fastened to the cantilever arm (50) at a distance from the support device (12) and a second end (54) of the support rope (52) is fastened in the area of the mast (1) above the support device (12).

13. The method according to claim 12,
**characterized in that**
the fastening of the support rope (52) to the mast (1) is carried out before the cantilever arm (50) is positioned in the area of the support device (12).

## Revendications

1. Dispositif (10) de fixation, notamment d'un bras en porte-à-faux (50) en forme de tige à un mât (1), le dispositif (10) ayant un dispositif de support (12) qui peut être fixé au mât (1) et qui est réalisé comme composant séparé du mât (1) et du bras en porte-à-faux (50), le dispositif (10) ayant aussi au moins une réception (26) réalisée sur le dispositif de support (12) et destinée à la disposition par forme d'un élément de raccordement (62) du bras en porte-à-faux (50) sur une zone de raccordement (60) du bras en porte-à-faux (50), et le dispositif (10) ayant un élément de retenue (36) destiné à retenir l'élément de raccordement (62) du bras en porte-à-faux (50) dans la réception (26) du dispositif de support (12),
**caractérisé en ce que**
le dispositif de support (12) a deux zones de bord (20) qui sont disposées parallèles l'une par rapport à l'autre et qui sont réalisées sous la forme de plaques latérales (22) et qui sont réalisées pour réaliser un espace de réception (25) pour la section transversale de la zone de raccordement (60) du bras en porte-à-faux (50) entre les zones de bord (20), dans lequel une réception (26) pour l'élément de raccordement (62) qui fait saillie latéralement de la zone de raccordement (60) du bras en porte-à-faux (50) est réalisée dans chaque zone de bord (20), et dans lequel la réception (26) est réalisée sous la forme d'une fente de réception (28) qui a une ouverture (30) pour l'insertion de l'élément de raccordement (62) sur une face supérieure de la zone de bord (20), et dans lequel la fente de réception (28) passe dans un guidage horizontal (34) pour l'élément de raccordement (62) sur un côté qui est assigné au mât (1).

2. Dispositif selon la revendication 1,
**caractérisé en ce que**
la section transversale de l'espace de réception (25) est adaptée pour la disposition par forme du bras en porte-à-faux (50) de manière solidaire en rotation autour d'un axe longitudinal (X) du bras en porte-à-faux (50).

3. Dispositif selon la revendication 1 ou la revendication 2,
**caractérisé en ce que**
l'élément de retenue (36) est destiné à fermer la zone de l'ouverture (30) de la fente de réception (28) par une liaison (48) par serrage quand l'élément de raccordement (62) est disposé dans le guidage horizontal (34).

4. Dispositif selon la revendication 3,
**caractérisé en ce que**
l'élément de retenue (36) a une section transversale, notamment en forme de cale, qui s'effile dans une direction (39) dans laquelle l'élément de retenue (36) est inséré dans l'ouverture (30).

5. Dispositif selon la revendication 3 ou la revendication 4,
**caractérisé en ce que**
l'élément de retenue (36) a des guidages (40, 41) qui sont destinés à aligner l'élément de retenue (36) par rapport au dispositif de support (12) pendant l'insertion dans l'ouverture (30) et qui interagissent avec les zones de bord (20) du dispositif de support (12).

6. Dispositif selon l'une quelconque des revendications 1 à 5,
**caractérisé en ce que**
l'élément de retenue (36) peut en outre être fixé au dispositif de support (12) au moyen d'une liaison par force, notamment au moyen d'un raccord vissé (45).

7. Dispositif selon l'une quelconque des revendications 3 à 6,
**caractérisé en ce que**
l'élément de retenue (36) est composé d'un matériau qui est similaire au matériau du dispositif de support (12) dans la zone de l'ouverture (30), de préférence plus doux.

8. Ensemble (100) ayant un dispositif (10) réalisé selon l'une quelconque des revendications 1 à 7, un mât (1) et un bras en porte-à-faux (50) qui est fixé au mât (1) au moyen du dispositif (10).

9. Ensemble selon la revendication 8,
**caractérisé en ce que**
le bras en porte-à-faux (50) est destiné à supporter des lignes de courant de traction pour des véhicules ferroviaires ou terrestres.

10. Procédé de formation d'un ensemble (100) selon la revendication 8 ou la revendication 9, le procédé comprenant au moins les étapes suivantes :
- fixer le dispositif de support (12) au mât (1)
- insérer au moins un élément de réception (62) du bras en porte-à-faux (50) dans la réception (26) du dispositif de support (12)
- retenir l'élément de réception (62) dans la réception (26) du dispositif de support (12) par une fixation par serrage de l'élément de retenue (36) au dispositif de support (12).

11. Procédé selon la revendication 10,
**caractérisé en ce que**
l'élément de retenue (36) est en outre relié au dispositif de support (12) par une liaison par force, notamment par un raccord vissé (45).

12. Procédé selon la revendication 10 ou la revendication 11,
**caractérisé en ce que**
le bras en porte-à-faux (50) est positionné dans une position horizontale sur le mât (1) au moyen d'un câble porteur (52), dans lequel une première extrémité (53) du câble porteur (52) est fixée au bras en porte-à-faux (50) à une distance du dispositif de support (12) et une deuxième extrémité (54) du câble porteur (52) est fixée dans la zone du mât (1) au-dessus du dispositif de support (12).

13. Procédé selon la revendication 12,
**caractérisé en ce que**
la fixation du câble porteur (52) au mât (1) est réalisée avant le positionnement du bras en porte-à-faux (50) dans la zone du dispositif de support (12).
